# EUROPEAN PATENT APPLICATION

(11) **EP 1 986 175 A2**
(43) Date of publication of application: **29.10.2008**
(21) Application number: 07254696.3
(22) Date of filing: 04.12.2007
(51) Int. Cl.: G09B 7/02

(54) **Method, interface and system for obtaining user input**

(30) Priority: 29.12.2006 US 618485
(71) Applicant: Fairfield Language Technologies, Harrisonburg, VA 22801 (US)
(72) Inventor: Fairfield, John R., Bridgewater 22812, Virginia (US)
(74) Representative: Waldren, Robin Michael

(57) **Abstract**

A system for soliciting a user response comprises user interface and one or more presentation modules to assist users to learn a language. The system presents a presentation module including a first description of a presentation subject and a placeholder indicating that a second description of the presentation subject is missing from the presentation module. Each of the first description of the presentation subject and the second description of the presentation subject is one of a textual type, a visual type and an audio type. Separated from the presentation module, the system presents the second description of the presentation subject, and receives a user input indicating an association of the presented second description to presentation module related to the presentation subject. Feedback is provided indicating the correctness of the association. The disclosure also describes a unique program design approach to form training programs using the presentation modules.

## Description

### FIELD OF THE INVENTION

The present disclosure generally relates to a method, computerized interface and machine (e.g. computer) readable medium containing instructions, for obtaining user input, e.g. for tuition and/or presentation applications. It includes a computer-aided method and system providing a unique user interface to improve learning experiences and ease of course design, and more specifically, to a computer-aided method and system that selectively generate and present presentation modules in a unique format to assist users in associating objects and events with a specific language, such as pronunciations, words, descriptions, spelling, etc., with improved simplicity and efficiency in system resource usage.

### BACKGROUND OF THE INVENTION

Computers and software programs have been widely used in assisting users in learning new languages. The primary steps in creating a language learning program include content creation and content presentation. Content presentation defines a user's language learning experience and therefore plays an important role in the language learning process. However, conventional language learning programs lack an effective approach in presenting a multimedia user interface to provide a satisfactory learning experience.

Furthermore, as the design and management of multimedia user interfaces involve complex processes, and the operation of multimedia user interfaces demands a lot of system resources including storage space and processing power, there is a need for an efficient design process that reduces resource demands and requirement of storage space. There is a further need for a simple process for creating new elements for a multimedia user interface using existing data stored in the system.

### DEFINITION OF THE INVENTION

In its broadest aspects, the present invention provides a method for soliciting user input for a presentation subject, e.g. as defined by any aspect of the present invention as defined or claimed hereinbelow. A preferred class of such a method resides in a language instruction method. In these broad aspects, the present invention provides a computer interface for interacting with a user. The interface may for example be an interface between a user and one or more of an electronic database, an electronic presentation system, an electronic tuition system and an electronic information gathering system. Such an interface may include means arranged to perform machine executed steps controlled by the computer in accordance with instructions stored on a machine readable medium. The broad aspects of the present invention also include a machine readable medium storing instructions which when executed by a data processing system, are capable of performing a method according to any aspect(s) of the present invention.

Reference herein to 'machine' or 'data processing system' include such a machine or system in electronic form. The term 'electronic' includes application in the form of electrical signals, eg at KHz, MHz or GHz frequency, optical (including infrared) signals, acoustic (including ultrasonic signals) and where any of these is capable of propagation in free space, either in radiated or in wired or guided form.

Reference herein to 'language instruction' means instruction in the learning or practice of a foreign language, i.e. foreign in comparison with the native language of a user.

Thus, a first aspect of the present invention now provides a computer interface for interacting with a user in order to obtain from the user, an input for a presentation subject associated with a first description of the presentation subject and a second description of the presentation subject, the interface comprising:
(a) means for presenting a presentation module related to the presentation subject, wherein the presentation module includes the first description of the presentation subject and a placeholder indicating that the second description of the presentation subject is missing from the presentation module;
(b) means for receiving a user input indicating an association of the second description to presentation module related to the presentation subject; and
(c) means for providing feedback indicating the correctness of the user input with respect to the second description of the presentation subject.

A second aspect of the present invention provides a method for soliciting user input for a presentation subject associated with a first description of the presentation subject and a second description of the presentation subject, the method comprising the machine-executed steps of:
presenting a presentation module related to the presentation subject, wherein the presentation module includes the first description of the presentation subject and a placeholder indicating that the second description of the presentation subject is missing from the presentation module;
presenting the second description of the presentation subject;
receiving a user input indicating an association of the second description to presentation module related to the presentation subject; and
providing feedback indicating the correctness of the association.

A third aspect of the present invention provides a machine-readable medium storing instructions which, upon execution by a data processing system, controls the data processing system to perform the machine executed steps of:
presenting a presentation module related to a presentation subject, wherein the presentation module includes a first description of the presentation subject and a placeholder indicating that a second description of the presentation subject is missing from the presentation module;
presenting the second description of the presentation subject;
receiving a user input indicating an association of the second description to presentation module related to the presentation subject; and
providing feedback indicating the correctness of the association.

A fourth aspect of the present invention provides a machine-readable medium storing instructions which, upon execution by a data processing system, controls the data processing system to perform the machine executed steps of:
presenting a presentation module including a first description of a presentation subject and a placeholder indicating that a second description of the presentation subject is missing from the presentation module;
receiving a user input with respect to the second description of the presentation subject;
comparing the user input with prestored data of the second description of the presentation subject; and
providing feedback indicating the correctness of the user input with respect to the second description of the presentation subject.
wherein each of the first description of the presentation subject and the second description of the presentation subject is one of a textual type, a visual type and an audio type.

A fifth aspect of the present invention provides a language instruction method for soliciting user input for a presentation subject associated with a first description of the presentation subject and a second description of the presentation subject, the method comprising the machine-executed steps of presenting a presentation module related to the presentation subject, wherein the presentation module includes the first description of the presentation subject and a placeholder indicating that the second description of the presentation subject is missing from the presentation module; presenting the second description of the presentation subject; receiving a user input indicating an association of the second description to presentation module related to the presentation subject; and providing feedback indicating the correctness of the association; wherein each of the first description of the presentation subject and the second description of the presentation subject is one of a textual type, a visual type and an audio type.

A sixth aspect of the present invention provides a language instruction method for soliciting user input for a presentation subject associated with a first description of the presentation subject and a second description of the presentation subject, the method comprising the machine-executed steps of: presenting a presentation module including the first description of the presentation subject and a placeholder indicating that the second description of the presentation subject is missing from the presentation module; receiving a user input with respect to the second description of the presentation subject; comparing the user input with prestored data of the second description of the presentation subject; and providing feedback indicating the correctness of the user input with respect to the second description of the presentation subject.

### SUMMARY OF THE DISCLOSURE

With regard to any method according to the present invention, preferably, the first description and the second description are in the same language. Any method according to the invention preferably also comprises the steps of accessing data related to at least one presentation module related to a reference subject, wherein each of the at least one presentation module related to the reference subject includes a first description of the reference subject and a placeholder indicating that a second description of the reference subject is missing from the presentation module related to the reference subject; and presenting the at least one presentation module related to the reference subject. The presentation module may be related to the presentation subject is displayed together with the at least one module related to the reference subject.

Further, in any method according to the present invention, the first description of the presentation subject may be a visual representation of the presentation subject. A database may be provided for storing the visual representation of the presentation subject, wherein the visual representation is usable by multiple presentation modules.

More specifically, a database may be provided for storing a plurality of descriptions, wherein: each of the descriptions is one of a textual type, a visual type and an audio type; and at least one of the descriptions is usable by multiple presentation modules. The method may then comprise accessing the at least one description stored in the database; assembling the presentation module related to the presentation subject by using at least one of the descriptions stored in the database; accessing data related at least one reference subject; for each reference subject, assembling a presentation module related to the reference subject by using at least one of the descriptions stored in the database, wherein each of the presentation module related to the reference subject includes a first description of the reference subject and a placeholder indicating that a second description of the reference subject is missing from the presentation module related to the reference subject; and presenting the presentation module related to the at least one reference subject together with the presentation module related to the presentation subject.

In particular, a score record may be generated, indicating the user's performance in providing the user input.

Further, the user input with respect to the second description is preferably a textual input entered by a user using a keyboard or a voice-to-text converter. The user input with respect to the second description may also be a voice input provided by a user using a microphone. In one class of arrangements, the input with respect to the second description means include a textual input and a voice input.

The feedback preferably indicates the correctness of the user input with respect to at least one of pronunciation, intonation and spelling. A score record may be produced, indicating the user's performance in providing the user input.

The presentation subject may be a visual representation of the presentation subject. In any method according to the present invention, a database storing the visual representation of the presentation subject may be provided, wherein the visual representation is usable by multiple presentation modules. Further, a database storing a plurality of descriptions may be provided, wherein each of the descriptions is one of a textual type, a visual type and an audio type; and at least one of the descriptions is usable by multiple presentation modules. The method may then further entail steps of accessing data related to multiple presentation subjects; accessing the at least one description stored in the database; and assembling presentation modules corresponding to the multiple presentation subjects by using the descriptions stored in the database.

The presentation module may also be generated by accessing the at least one description stored in the database, and assembling the presentation module corresponding to the presentation subject by using at least one the descriptions stored in the database.

In any computer interface or machine-readable medium according to the present invention, the first description and the second description may be in the same language.

The machine-readable medium may further store instructions which, upon execution by a data processing system, controls the data processing system to perform the machine-executed steps of: accessing data related to at least one presentation module related to a reference subject, wherein each of the at least one presentation module related to the reference subject includes a first description of the reference subject and a placeholder indicating that a second description of the reference subject is missing from the presentation module related to the reference subject; and presenting the at least one presentation module related to the reference subject. Further, the presentation module related to the presentation subject is preferably displayed together with the at least one module related to the reference subject. The first description of the presentation subject may be a visual representation of the presentation subject. Instructions may also be stored which, upon execution by a data processing system, controls the data processing system to provide a database storing the visual representation of the presentation subject, wherein the visual representation is usable by multiple presentation modules.

The machine-readable medium may further store instructions which, upon execution by a data processing system, controls the data processing system to provide a database storing a plurality of descriptions, wherein: each of the descriptions is one of a textual type, a visual type and an audio type; and at least one of the descriptions is usable by multiple presentation modules. In addition instructions which, upon execution by a data processing system, may control the data processing system to perform the steps of: accessing the at least one description stored in the database; assembling the presentation module related to the presentation subject by using at least one of the descriptions stored in the database; accessing data related at least one reference subject; for each reference subject, assembling a presentation module related to the reference subject by using at least one of the descriptions stored in the database, wherein each of the presentation module related to the reference subject includes a first description of the reference subject and a placeholder indicating that a second description of the reference subject is missing from the presentation module related to the reference subject; and presenting the presentation module related to the at least one reference subject together with the presentation module related to the presentation subject.

Instructions which, upon execution by a data processing system, may control the data processing system to provide a score record indicating the user's performance in providing the user input.

The user input with respect to the second description may be a textual input entered by a user using a keyboard or a voice-to-text converter. The voice input provided by a user may be effected using a microphone and particularly the user input with respect to the second description includes both a textual input and a voice input.

The feedback preferably indicates the correctness of the user input with respect to at least one of pronunciation, intonation and spelling. The first description of the presentation subject is a visual representation of the presentation subject.

Instructions may be provided which, upon execution by a data processing system, controls the data processing system to perform the steps of:
accessing data related to multiple presentation subjects; assembling presentation modules corresponding to the multiple presentation subjects by using the descriptions stored in the database.

Any computer interface according to the present invention may comprise, as hardware, an electronic communication highway for communicating information, a data processor coupled with the communication highway for processing data, a dynamic memory device coupled wit the communicating highway for storing at least information and instructions to be executed by the processor, a static memory device for storing static information and instructions for the processor, a bulk storage device coupled to the information highway for storing information and instructions, a display, a user input device and a communication interface for connection to a remote data source.

### DETAILED DESCRIPTION OF THE INVENTION

This disclosure includes embodiments of modularized computer-aided language learning systems that address one or more needs and drawbacks existing in conventional language instruction systems. Any embodiment itself may represent an aspect of the present invention which may be claimed independently. Further, any aspect of the present invention may incorporate one or more essential, preferred or exemplified features of any one or more other aspects of the present invention.

An exemplary language instruction method and system are configured to solicit user input for a presentation subject having an associated first description and an associated second description. In preferred embodiments hereinbelow, a presentation module is described. The presentation module includes a first description of the presentation subject and a placeholder indicating that a second description of the presentation subject is missing from the presentation module. Each of the first description of the presentation subject and the second description of the presentation subject is one of a textual type, a visual type and an audio type. In one aspect, the descriptions are in the same language. The second description of the presentation subject is presented separately from the presentation module. A user input indicating an association of the second description to presentation module related to the presentation subject is received. Feedback is provided to indicate the correctness of the association. In one aspect, the feedback may be a score record indicating the user's performance in providing the user input.

In one embodiment, at least one additional presentation module is presented. The at least one presentation module relates to a reference subject. Each of the at least one presentation module includes a first description of the reference subject and a placeholder indicating that a second description of the reference subject is missing from the presentation module related to the reference subject. In one aspect, the presentation module related to the presentation subject is displayed together with the at least one module related to the reference subject.

In one embodiment, the first description of the presentation subject is a visual representation of the presentation subject. A database storing the visual representation of the presentation subject may be provided. The visual representation may be usable by multiple presentation modules.

In another embodiment, a database is provided storing a plurality of descriptions. Each of the descriptions is one of a textual type, a visual type and an audio type. At least one of the descriptions is usable by multiple presentation modules. According to one embodiment, the at least one description stored in the database is used in assembling the presentation module related to the presentation subject or the presentation module related to the reference subject.

According to another embodiment, an exemplary language instruction method and system are configured to solicit user input for a presentation subject. A presentation module is presented. The presentation module includes a first description of the presentation subject and a placeholder indicating that a second description of the presentation subject is missing from the presentation module. Each of the first description of the presentation subject and the second description of the presentation subject is one of a textual type, a visual type and an audio type. A user input with respect to the second description of the presentation subject is received. The user input is compared with prestored data of the second description of the presentation subject. Feedback may be provided indicating the correctness of the user input with respect to the second description of the presentation subject.

In one aspect, the user input with respect to the second description is a textual input entered by a user using a keyboard or a voice-to-text converter, such as a microphone. In another aspect, the user input with respect to the second description is a voice input provided by a user using a microphone. In still another aspect, the user input with respect to the second description includes a textual input and a voice input. In another aspect, the feedback indicates the correctness of the user input with respect to at least one of pronunciation, intonation and spelling. In a further aspect, a score record is provided indicating the user's performance in providing the user input.

According to one embodiment, a database storing a plurality of descriptions is provided. Each of the descriptions is one of a textual type, a visual type and an audio type. At least one of the descriptions is usable by multiple presentation modules. In constructing presentation modules, data related to multiple presentation subjects and descriptions is accessed. Presentation modules corresponding to the multiple presentation subjects are assembled by using the descriptions stored in the database. According to one embodiment, one or more presentation modules are grouped together and displayed on one or more pages. Each page is displayed to the learner in a pre-arranged sequence.

The concepts described in this disclosure may be implemented using a data processing system, a machine-readable medium including instruction which, upon execution by a data processing system, control the data processing system to perform specified steps, or a combination thereof.

Additional aspects and advantages of the present disclosure will become readily apparent to those skilled in this art from the following detailed description, wherein only exemplary embodiments of the present disclosure is shown and described, simply by way of illustration of the best mode contemplated for carrying out the present disclosure. As will be realized, the present disclosure is capable of other and different embodiments, and its several details are capable of modifications in various obvious respects, all without departing from the disclosure. Accordingly, the drawings and description are to be regarded as illustrative in nature, and not as restrictive.

### BRIEF DESCRIPTION OF THE DRAWINGS

The present disclosure is illustrated by way of example, and not by way of limitation, in the figures of the accompanying drawings and in which like reference numerals refer to similar elements and in which:

Figure 1 shows an exemplary presentation module;

Figure 2 shows another embodiment of exemplary presentation modules;

Figure 3 illustrate exemplary presentation modules directed to the same presentation subject;

Figure 4 shows additional examples of presentation modules;

Figure 5 shows block diagrams of exemplary variations of presentation modules that may be used to solicit user inputs;

Figure 6 are exemplary presentation modules displayed with a visual representation of a presentation subject and a placeholder suggesting that a textual description and an audio description are missing from the presentation modules;

Figure 7 illustrates another example of a game built using presentation modules with placeholders;

Figure 8 shows a simplified sequence of presentation modules;

Figure 9 shows exemplary data libraries storing a plurality of data modules including visual data modules, text data modules and audio data modules;

Figure 10 is an illustration of exemplary presentation modules using data modules included in an exemplary database shown in Figure 8; and

Figure 11 is the block diagram of an exemplary data processing system upon which the concepts in this disclosure may be implemented.

### DETAILED DESCRIPTION OF THE DISCLOSURE

In the following description, for the purposes of explanation, numerous specific details are set forth in order to provide a thorough understanding of the present disclosure. It will be apparent, however, to one skilled in the art that the present disclosure may be practiced without these specific details. In other instances, well-known structures and devices are shown in block diagram form in order to avoid unnecessarily obscuring the present disclosure.

An exemplary language learning program according to this disclosure provides a user interface utilizing a unique presentation module including modularized elements, such as visual, audio, textual descriptions, a combination of visual images and sound, etc., and/or any combinations thereof, corresponding to a presentation subject. A presentation subject is anything that the language learning program intends the user to learn in a specific language. A presentation subject may be an object, a widget, an animal, a device, a machine, an event, a situation, a scenario, a conversation, a scene, an alphabet, a concept, a performance, an action, etc. A presentation module is the basic construction block used for creating a unique user interface to assist the user associating the visual, textual and audio descriptions corresponding to a presentation subject. Various variations of the presentation module may be used to construct a user interface.

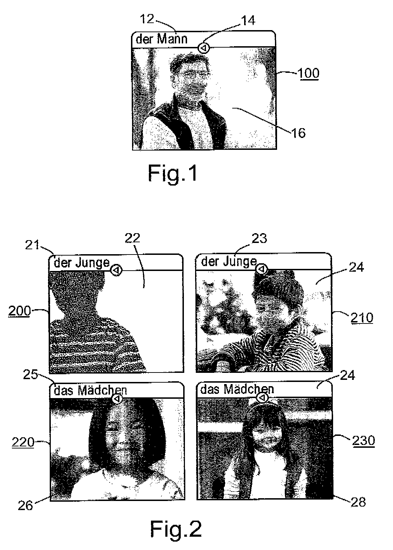

An exemplary presentation module includes at least two a placeholder, a visual component of a presentation subject, a textual component of the presentation subject and an audio component of the presentation subject. Figure 1 shows an exemplary presentation module 100 for presenting a presentation subject to a user using a language learning program to learn German. In this example, the presentation subject is "a man."

The presentation module 100 includes a visual component 16, a textual component 12 and an audio component 14. The visual component 16 provides a visual representation corresponding to the presentation subject. For instance, the image component 16 may be a static image, a video clip, a moving picture, etc., or any combination thereof. The textual component 12 includes a textual description, such as one or more words, one or more sentences, etc., corresponding to or describing the presentation subject in the language that the user intends to learn. In one embodiment, the visual component may include sound and/or text in addition to visual images.

In the example illustrated in Fig. 1, the German phrase "der Mann" is shown. The audio component 14 of the presentation module 100 is a visual representation that allows a user to activate an audio signal generator, such as a speaker, to produce an audible description corresponding to the presentation subject or the textual component 12. The audio component 14 may be an icon of a speaker, an icon of a switch, a button with associated text indicating its function to play audio, etc. or any combination thereof. In Figure 1, the audio component 14 is a speaker icon. When the icon is clicked, the German pronunciation corresponding to "der Mann" is played. The presentation of visual, audio and textual elements in the same presentation module allows easy access to different expression forms of an underlying presentation subject, and assists a user to associate the textual/audio/visual elements with the underlying presentation subject.

In one embodiment, an exemplary language learning program includes data corresponding to visual, audio and textual descriptions corresponding to the same or different presentation subjects. The data is assembled, compiled and linked to form presentation modules corresponding to the presentation subjects. In one embodiment, the visual, audio and/or textual descriptions in this application are in the same language.

It is understood that presentation modules could be presented in different forms. For instance, a presentation module may include only two of a textual description, an audio description and a visual description of a presentation module. With the assistance of these presentation modules, users can associate the descriptions included in the presentation module with the presentation subject.

The textual, audio and visual elements or descriptions of a presentation module, or any representations of the elements or descriptions are visually displayed in such a way that the elements or descriptions belong to that presentation module, even when a number of presentation modules are juxtaposed. The user should be able to infer or perceive that the items or descriptions are related to each other or associated with the same presentation module. In other words, the display should allow a user to infer that the textual/audio/visual elements or descriptions corresponding to a specific presentation module are more closely related to one another than possible relationships between elements or descriptions associated with other presentation modules that are displayed in the same display with that specific presentation module.

According to one embodiment, the textual description, the visual description and the audio description associated with the same presentation module, or any visual representation thereof, such as an audio speaker button, are displayed touching each other or closely clustered, or having a visual boundary enclosing or encircling the descriptions, one or more textual descriptions indicating their relationships, and/or having a graphical link connecting the descriptions, etc., or any combinations thereof. Some space may be provided between presentation modules on a display page.

According to one embodiment of this disclosure, presentation modules may include different forms of visual, audio and/or textual descriptions corresponding to the same presentation subject. For instance, for the same presentation subject "a man," various forms of visual presentations or descriptions corresponding to the concept "a man" may be presented, such as a young man, an old man, a man in suit, a man in bath robe, a man standing, a man lying down, etc. The visual presentations or descriptions may be the same man or different men, and the format of the visual presentations or descriptions may differ, such as pictures, video clips, photos, drawings, cartoons, etc.

Similarly, various presentation modules may include variations of the audio and/or textual descriptions corresponding to the same presentation subject. For example, the German pronunciation of "der Mann" may be produced by different men, women and/or children, or by the same person or different persons in different accents. The word "der Mann" may be displayed in different font types, sizes, colors, effects, etc.

Figure 2 shows four exemplary presentation modules 200, 210, 220 and 230. Both presentation modules 200 and 210 are directed to the same presentation subject "a boy," while presentation modules 220 and 230 are related to the same presentation subject "a girl." While the textual descriptions 21 and 23 in presentation modules 200 and 210 are the same German word "der Junge," the visual elements 22 and 24 show pictures of two different boys. Likewise, while the textual descriptions 25 and 27 in presentation modules 220 and 230 are the same German word "der Man," the visual elements 26 and 28 show pictures of two different girls. Each of the presentation modules 200, 210, 220 and 230 includes a speaker button which, when clicked by a user, will play the pronunciation describing the respective presentation subject or the respective textual description in each presentation module.

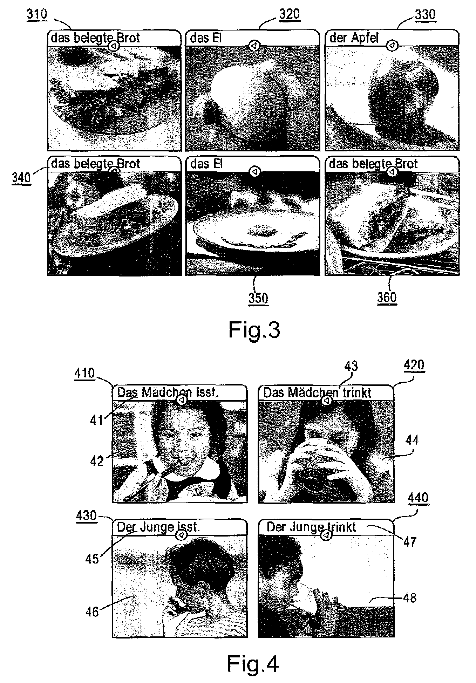

Figure 3 shows additional embodiments of the use of presentation modules. In Figure 3, both presentation modules 320 and 350 are directed to the same presentation subject "egg," and include the same German word "das Ei" and its pronunciation. However, presentation modules 320 and 350 include pictures of different form of eggs. Similarly, presentations modules 310, 340 and 360 relate to the same presentation subject "sandwiches." While the textual description "das belegte Brot" is the same in each of presentation modules 310, 340 and 360, the picture in each presentation module shows a sandwich in different form. Each of the presentation modules 310, 320, 330, 340, 350 and 360 includes a speaker button which, when clicked by a user, will play the pronunciation describing the respective presentation subject or corresponding to the respective textual description in each presentation module.

In one embodiment, multiple modules are presented to a user using a specific sequence, to allow the user to learn new words/concepts based on what he or she has learned from earlier presentation modules. For instance, presentation modules 200, 210, 220 and 230 may be shown to a user first, to assist the user to learn the German words "der Junge" and "das Madchen" corresponding to the concepts of "a boy" and "a girl." Additional presentation modules, such as presentation modules 410, 420, 430 and 440 in Figure 4, are shown to the user subsequent to the presentation of modules 200, 210, 220 and 230, to leverage the knowledge that the user learns from modules 200, 210, 220 and 230. As illustrated in Figure 4, both presentation modules 410 and 420 are related to acts of a girl, and presentation modules 430 and 440 show acts of a boy. Each of the presentation modules 410, 420, 430 and 440 includes a speaker button which, when clicked by a user, will play the pronunciation describing the respective presentation subject or corresponding to the respective textual description in each presentation module.

In presentation module 410, a girl is eating; and in presentation module 430, a boy is eating. As the user already learned the German words "das Machen" and "der Junge" from presentation modules 200, 210, 220 and 230, additional knowledge can be built based on these learned concepts. Thus, when the textual component 41 "Das Machen isst" of presentation module 410 or "Der Junge isst" of presentation module 430 is shown to the user, the user will associate the German word "isst" with the act of "eating," as illustrated in the presentation modules 410 and 430. Similarly, the user will associate the German term "trinkt" with the act "drinking," based on the presentations of presentation modules 420 and 440.

According to one aspect of this disclosure, variations of presentation modules could be used to solicit user inputs, such as spelling and/or pronunciations, with respect to a specific presentation subject. For instance, a presentation module may include only a visual description and/or a textual description corresponding to a presentation subject, but without one or more other descriptions corresponding to the presentation subject, such as a corresponding audio description. Instead, a placeholder is included in the presentation module, to allow the user to visualize that one or more descriptions, such as the audio description, is missing or not included in the presentation module. A placeholder is a visual indication or display that indicates an element missing from the presentation module. For instance, a placeholder could be a bordered blank area replacing the missing element in the presentation module, or displayed at a location at which the missing element should be displayed.

In one embodiment, if an audio element is missing, the language learning program solicits or prompts the user to input the pronunciation corresponding to the underlying presentation subject. The solicitation or prompt may be in the form of a visual and/or audio request. The user may provide the missing description via a user input device, such as a microphone, a keyboard, an on-screen keyboard, a writing tablet, etc., to input the missing description into the language learning system. For example, a user may input the pronunciation via a voice input device, such as a microphone. Upon receipt of the user's voice input, the language learning program and system compares the input with pre-stored data representing the correct pronunciation of the textual description or the presentation subject. A feedback may be provided to the user to indicate the correctness of the input. The feedback may include a pass/fail indication, an analysis of the voice print of the user relative to that of a native speaker, etc.

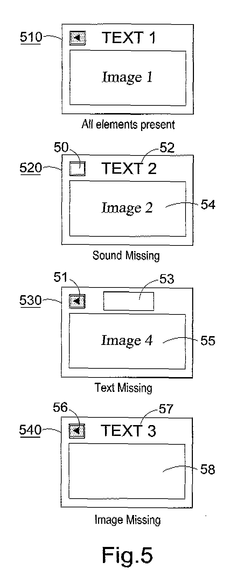

Figure 5 shows block diagrams of exemplary variations of presentation modules that may be used to solicit user inputs. Presentation module 510 is a presentation module with all visual/textual/audio description corresponding to a presentation subject. Presentation module 520 is a first exemplary variation in which a textual description 52 and a visual description 54 are provided, but an audio element is missing from the presentation module 520. Instead, a placeholder 50 in the form of a bordered blank area occupies the display area at which an audio description icon should have been displayed. Presentation module 530 is another exemplary variation of a presentation module, in which a visual description 55 and audio description 51 are provided, but a textual description is missing. At the display area where a textual description should have been displayed, a placeholder 53 is displayed hinting that a corresponding textual description is missing from the presentation module. Presentation module 540 is another exemplary variation of a presentation module, in which a textual description 57 and audio description 56 are provided, but a visual description is missing. At the display area where a textual description should have been displayed, a placeholder 58 is displayed in place of the missing visual description.

As discussed earlier, it is understood that an exemplary presentation module may include only two of a textual description, an audio description and a visual description of a presentation module. Similarly, variations of this type of presentation modules could be presented with one of the descriptions included in a presentation module and a placeholder indicating that one of the descriptions is missing from the presentation module.

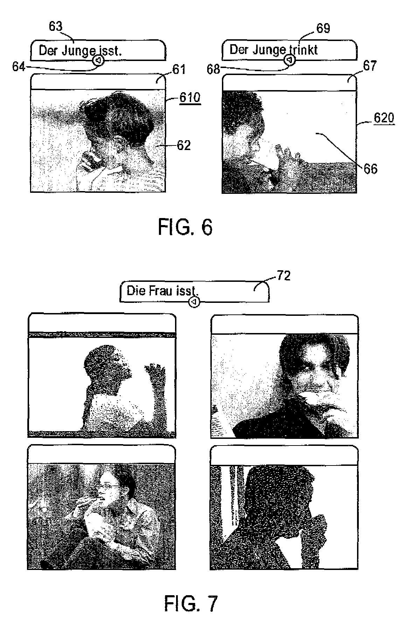

In one embodiment, the presentation modules with placeholders are used to build or create games or practice sessions to assist users of the language learning system in learning presentation subjects and their respective audio/visual/textual descriptions. According to one embodiment, the missing description(s) are also displayed not as part of a presentation module with a placeholder. A request is provided to the user to click to select or drag and drop the displayed missing description(s) to the presentation module. As shown in Figure 6, a presentation module 610 is displayed with an image 62 showing a boy eating and a placeholder 61 suggesting that a textual description and an audio description corresponding to "a boy eating" are missing from the presentation module 610. Above the presentation module 610, the German phrase "Der Junge isst" 63 and a speaker icon 64 are displayed. In one embodiment, the language learning system automatically plays the pronunciation of "Der Junge isst." If the user wishes to listen to the pronunciation again, he or she may click the speaker icon 64 and the system will re-play the pronunciation. An exemplary system may ask the user to click to select or drag and drop the textual description 63 and the speaker icon 64 to the placeholder 61. Similarly, a presentation module 620 is displayed with an image 66 showing a boy drinking and a placeholder 67 suggesting that a textual description and an audio description corresponding to "a boy drinking" are missing from the presentation module 620. Above the presentation module 620, the German phrase "Der Junge trinkt" 69 and a speaker icon 68 are displayed. The exemplary system may ask the user to drag and drop the textual description 69 and the speaker icon 68 to the placeholder 67. A feedback may be provided to the user indicating whether the click-and-select or drag-and-drop operation is correct and/or other information related to the user's performance related to this operation or accumulated performance scores. This drag-and-drop session would help a user associating the German phrases and the pronunciations with the images or the presentation subjects.

Figure 7 illustrates another example of a game built using presentation modules with placeholders. The game shown in Figure 7 intends to test a user's understanding of the German phrase corresponding to a presentation subject "a woman eating." As shown in Figure 7, the German phrase "Die Frau isst" and a speaker icon 72 are displayed. Additionally, four presentation modules with placeholders are displayed to a user. One of the presentation modules includes an image corresponding to the presentation subject ("a woman eating," in this example). The other three presentation modules include images corresponding to reference subjects (in this example, "a woman drinking," "a man eating," and "a man drinking," respectively), which are different from the presentation subject and provided as selection options in addition to the image corresponding to the presentation subject "a woman eating."

A request is provided to the user to click to select or drag and drop the displayed missing description(s) 72 to one of the presentation modules, or to select or click a presentation module corresponding to the displayed missing description(s) 72. A feedback is provided to the user indicating whether the drag-and-drop operation is correct and/or other information related to the user's performance related to this operation or accumulated performance scores. This game would help the user to associate the presentation subject with the phrase/pronunciation in a foreign language.

It is understood that other variations of games can be created using the unique presentation modules disclosed herein. For instance, a game may be created by displaying an image corresponding to a presentation subject, and four presentation modules are provided as selection options. Each of which includes a speaker icon and a placeholder. The speaker icon, when clicked by the user, plays a pronunciation. One of the speaker icons would play a pronunciation corresponding to the presentation subject. The user is asked to associate the displayed image with one of the pronunciations. Other obvious variations of games using presentation modules with placeholders can be created using similar approaches as discussed above.

As discussed earlier, an exemplary presentation module includes one or more of a textual description, an audio description and a visual description corresponding to a presentation subject. An exemplary language learning system according to this disclosure utilizes a unique data management approach in creating and managing data of the presentation modules, which significantly reduces demands in system resources and simplifies the process for an instructor or language program designer in designing language learning programs.

According to one embodiment, an instructor or program designer chooses one or more presentation modules to form one or more pages to be presented to a language learner. Each page may include one or more presentation modules. The instructor or program designer may designate sizes and/or specific locations or coordinates for the presentation modules on a page. Presentation modules designated to be displayed in the same page may be displayed or presented all at the same time or sequentially. The presentation modules and the pages are displayed to the learner in a pre-arranged sequence. An instructor or program designer may use a software tool to design or construct pages to be presented to a language learner.

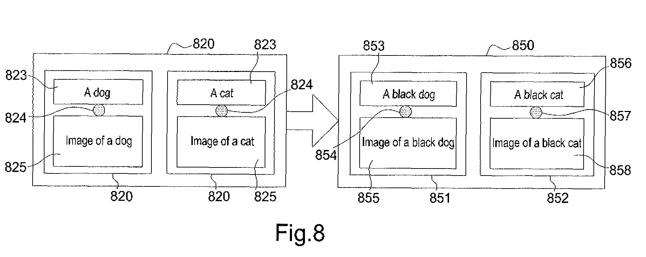

Figure 8 illustrates a simplified example of presentation design. A first display page 820 and a second display page 850 are displayed to a language learner in a sequential manner defined by a course instructor or an exemplary system according to this disclosure. The first display page 820 includes two presentation modules 821, 822, and the second display page 850 includes two presentation modules 851, 852. The presentation module 821 relates to "a dog" and includes visual, textual and audio descriptions 823, 824 and 825 of "a dog." The presentation module 822 presents the concept of "a cat" and includes visual, textual and audio descriptions 826, 827 and 828 corresponding to "a cat." The display page 820 is output to a display first, such that a language learner is exposed to the concepts of "a dog" and "a cat." Subsequent to the presentation of the first display page 820, the second display page 850 is displayed. The presentation modules 851, 852 in the display page 850 are related to the presentation subjects "a black dog" and "a black cat," respectively, and their corresponding descriptions. As the concepts of "a dog" and "a cat" were presented to the language learner previously by presenting the display page 820, the subsequent presentation of the subjects "a black dog" and "a black cat" via the presentation modules 851, 852 allowing the learner to learn the concepts of the color "black" in a seamless manner.

According to one embodiment, presentation subjects and related visual, textual and/or audio descriptions are selected from a data library to form a presentation module. In one aspect, an instructor or program designer specifies how presentation modules and/or pages should be presented, such as in a specific sequence, layout of the presentation modules on one or more pages, numbers of presentation modules on each page, removing or adding a description associated with a presentation module, designating what description(s) should be omitted or missing from a presentation module, and what description(s) should be present in a presentation module, designating a type of game or presentation mode for presenting the pages, etc., or any combinations thereof.

According to one embodiment of this disclosure, a presentation module may be designed to be displayed or presented with one or more corresponding visual, audio or textual descriptions removed. A variety of replacement items or descriptions may be provided to the learner, where they can choose replacement pieces from a set of possible solutions, or enter the replacement content themselves. It is also possible to remove only part of some descriptions. For example, a presentation module may be presented with just some words removed rather than the entire text element or description. In this case, the learner would have to provide the missing text either by typing it or by speaking it.

In another embodiment, a presentation module may be designed to be displayed or presented with unnecessary or incorrect descriptions in one or more corresponding visual, audio or textual descriptions removed. A language learner may learn by removing unnecessary descriptions from each presentation module. By providing a variety of games to replace or fill the missing components, or removing unnecessary elements, a learner can learn a wide variety of language content (vocabulary, grammar, spelling, etc.) or language skills (pronunciation, reading, writing, speaking, listening, etc).

According to another embodiment, lists of default design options (such as layouts, list of missing descriptions, list of games, etc) are provided, to assist the course design process. A subsequent step would be to compose these pages into a sequence which would then serve as a course of instruction.

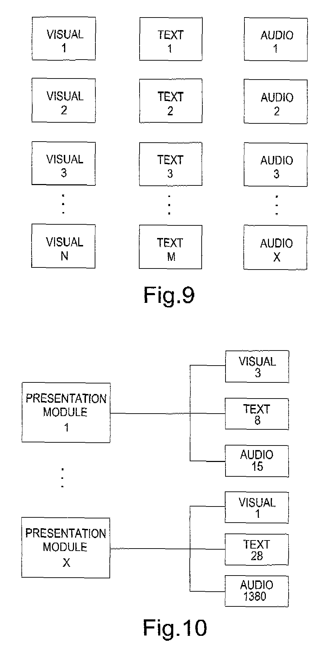

As shown in Figure 9, the exemplary system provides data libraries storing a plurality of data modules including visual data modules, text data modules and audio data modules. Each data module is a self-enclosed or self-contained file or object and can be dynamically accessed and linked with other modules to form a presentation module. Each data module is tagged to be associated with one or more presentation subjects or attributes. Each text data module includes textual descriptions or phrases corresponding to one or more tagged presentation subjects. For instance, a text data module including the phrase "a big black dog" may be tagged as corresponding to the presentation subjects of "big," "size," "black," "color," "dog," and "animal." Each visual data module includes visual data, such as images, video files, etc. or any combination thereof, and is tagged to be corresponding to one or more tagged presentation subjects. Each audio data module includes pronunciation or audio description data corresponding to one or more tagged presentation subjects. A data module may be tagged to be corresponding to more than one presentation subject. For instance, an image of a dog may be tagged to be corresponding to "a dog," "an animal," "a good friend," etc.

The system also includes a library storing a plurality of presentation subjects, such as "a girl," "a boy," "a car," "a man eating," etc. When a program designer needs to design a language learning program involving presentation modules, the designer simply selects presentation subjects that he or she wishes a user to learn from the library. Based on the selection of the presentation subjects, the system automatically selects needed modules having tags matching each presentation subject, and assembles one or more presentation modules using the selected data modules. This selection and assembly process may be performed in advance, or on the fly just before a presentation module is needed. If more than one data module has a tag matching a presentation subject, a random selection process may be performed. In one embodiment, a presentation subject may be specified to be corresponding to multiple tags. For instance, the presentation subject "a big black dog" may associate to tags like "big," "size," "black," "color," "dog," and "animal." Only those data modules with all or the highest number of matching tags will be retrieved by the system to form the presentation modules. A manual review of the generated presentation modules may be performed by a human being to ensure quality of the generated presentation modules, before the program is finalized or presented. A set of presentation modules may be grouped together logically to form an "presentation group," which designates a hierarchy for the learner, that a set of presentation modules are grouped in a sequence, or are more related than others.

According to another embodiment, the data modules are not pretagged. Rather, each time when a program designer needs to design a program, the designer performs a manual selection from the data module libraries to specify needed data modules for each presentation module. For instance, for a presentation subject related to a dog, a designer selects and links a visual data module including an image of a white puppy, an audio data file including the pronunciation of the phrase "a dog" and the sound of a dog barking. As illustrated in Figure 10, a program designer specifies data modules to be used to form various presentation modules 1 through X. Presentation module 1 should include visual data module 3, text data module 8 and audio data module 15; and presentation module X should include visual data module 1, text data module 28 and audio data module 1380. In one embodiment, a program designer may further specify different attributes for displaying presentation modules, such as a display location, such as a vertical and horizontal coordinate, for each module on a display device, what presentation modules to be included in which display page, a sequence that the modules should be presented. For instance, a designer may specify presentation modules 1, 29 and 35 should be included in display page 3, and presentation modules 124, 9 and 21 should be included in page 25.

Data related to the presentation subjects and corresponding selection and linking is stored. When a program designed by this process is to be presented to a user, the data related to the presentation subject and selection/linking of data modules is accessed. The system may assemble the presentation modules in advance or on the fly.

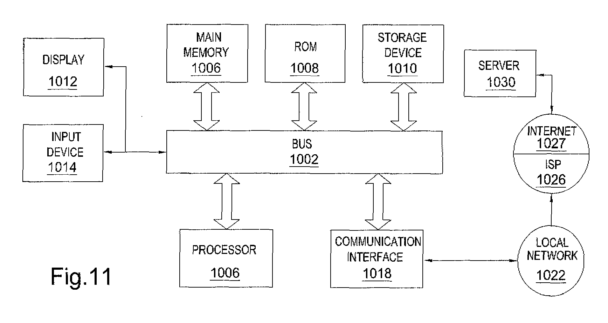

Figure 11 shows a block diagram of an exemplary data processing system that can be used to implement a language learning system described in this disclosure. The data processing system 1000 includes a bus 1002 or other communication mechanism for communicating information, and a data processor 1004 coupled with bus 1002 for processing data. Data processing system 1000 also includes a main memory 1006, such as a random access memory (RAM) or other dynamic storage device, coupled to bus 1002 for storing information and instructions to be executed by processor 1004. Main memory 1006 also may be used for storing temporary variables or other intermediate information during execution of instructions to be executed by data processor 1004. Data processing system 1000 further includes a read only memory (ROM) 1008 or other static storage device coupled to bus 1002 for storing static information and instructions for processor 1004. A storage device 1010, such as a magnetic disk or optical disk, is provided and coupled to bus 1002 for storing information and instructions.

The data processing system 1000 may be coupled via bus 1002 to a display 1012, such as a cathode ray tube (CRT) or liquid crystal display (LCD), for displaying information to an operator. An input device 1014, including alphanumeric and other keys, is coupled to bus 1002 for communicating information and command selections to processor 1004. Another type of user input device is cursor control 1016, such as a mouse, a trackball, or cursor direction keys and the like for communicating direction information and command selections to processor 804 and for controlling cursor movement on display 1012.

The data processing system 1000 is controlled in response to processor 1004 executing one or more sequences of one or more instructions contained in main memory 1006. Such instructions may be read into main memory 1006 from another machine-readable medium, such as storage device 1010. Execution of the sequences of instructions contained in main memory 1006 causes processor 1004 to perform the process steps described herein. In alternative embodiments, hard-wired circuitry may be used in place of or in combination with software instructions to implement the disclosure. Thus, embodiments of the disclosure are not limited to any specific combination of hardware circuitry and software.

The term "machine readable medium" as used herein refers to any medium that participates in providing instructions to processor 1004 for execution. Such a medium may take many forms, including but not limited to, non-volatile media, volatile media, and transmission media. Non-volatile media includes, for example, optical or magnetic disks, such as storage device 1010. Volatile media includes dynamic memory, such as main memory 1006. Transmission media includes coaxial cables, copper wire and fiber optics, including the wires that comprise bus 1002. Transmission media can also take the form of acoustic or light waves, such as those generated during radio wave and infrared data communications.

Common forms of machine readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a data processing system can read.

Various forms of machine-readable media may be involved in carrying one or more sequences of one or more instructions to processor 1004 for execution. For example, the instructions may initially be carried on a magnetic disk of a remote data processing system, such as a server. The remote data processing system can load the instructions into its dynamic memory and send the instructions over a telephone line using a modem. A modem local to data processing system 1000 can receive the data on the telephone line and use an infrared transmitter to convert the data to an infrared signal. An infrared detector can receive the data carried in the infrared signal and appropriate circuitry can place the data on bus 1002. Bus 1002 carries the data to main memory 1006, from which processor 1004 retrieves and executes the instructions. The instructions received by main memory 1006 may optionally be stored on storage device 1010 either before or after execution by processor 1004.

Data processing system 1000 also includes a communication interface 1018 coupled to bus 1002. Communication interface 1018 provides a two-way data communication coupling to a network link 1020 that is connected to a local network 1022. For example, communication interface 1018 may be an integrated services digital network (ISDN) card or a modem to provide a data communication connection to a corresponding type of telephone line. As another example, communication interface 1018 may be a local area network (LAN) card to provide a data communication connection to a compatible LAN. Wireless links may also be implemented. In any such implementation, communication interface 1018 sends and receives electrical, electromagnetic or optical signals that carry digital data streams representing various types of information.

Network link 1020 typically provides data communication through one or more networks to other data devices. For example, network link 1020 may provide a connection through local network 1022 to a host data processing system or to data equipment operated by an Internet Service Provider (ISP) 1026. ISP 1026 in turn provides data communication services through the world large packet data communication network now commonly referred to as the Internet 1027. Local network 1022 and Internet 1027 both use electrical, electromagnetic or optical signals that carry digital data streams. The signals through the various networks and the signals on network link 1020 and through communication interface 1018, which carry the digital data to and from data processing system 1000, are exemplary forms of carrier waves transporting the information.

Data processing system 1000 can send messages and receive data, including program code, through the network(s), network link 1020 and communication interface 1018. In the Internet example, a server 1030 might transmit a requested code for an application program through Internet 1027, ISP 1026, local network 1022 and communication interface 1018.

The data processing system 1000 also has various signal input/output ports (not shown in the drawing) for connecting to and communicating with peripheral devices, such as USB port, PS/2 port, serial port, parallel port, IEEE-1394 port, infra red communication port, etc., or other proprietary ports. The data processing system 1000 may communicate with the data processing system via such signal input/output ports.

In another embodiment, textual descriptions, audio descriptions and visual descriptions of a presentation subject may merge with each other. In other words, an element included in a presentation module may be a combination of an audio description and visual description, a combination of textual description and an audio description, or a combination of a textual description and a visual description. The data modules discussed earlier would store data related to the corresponding combinations.

The disclosure has been described with reference to specific embodiments thereof. It will, however, be evident that various modifications and changes may be made thereto without departing from the invention as defined by the appended claims. These concepts described in the disclosure can apply to various operations of the networked presentation system without departing from the concepts. The specification and drawings are, accordingly, to be regarded in an illustrative rather than a restrictive sense.

## Claims

1. A computer interface for interacting with a user in order to obtain from the user, an input for a presentation subject associated with a first description of the presentation subject and a second description of the presentation subject, the interface comprising:
(a) means for presenting a presentation module related to the presentation subject, wherein the presentation module includes the first description of the presentation subject and a placeholder indicating that the second description of the presentation subject is missing from the presentation module;
(b) means for receiving a user input indicating an association of the second description to presentation module related to the presentation subject; and
(c) means for providing feedback indicating the correctness of the user input with respect to the second description of the presentation subject.

2. A computer interface according to claim 1, further comprising means for presenting the second description of the presentation subject, wherein each of the first description of the presentation subject and the second description of the presentation subject is one of a textual type, a visual type and an audio type.

3. A computer interface according to either preceding claim, further comprising means for comparing the user input with prestored data corresponding to the description of the presentation subject.

4. A computer interface according to any preceding claim, wherein the user input is obtained for implementation in a language instruction method.

5. A computer interface according to any preceding claim, wherein means (a), (b) and (c) function to perform machine executed steps controlled by the computer in accordance with instructions stored on a machine readable medium.

6. A computer interface according to claim 5, wherein the machine readable medium further stores instructions which, upon execution by a data processing system, controls the data processing system to perform the machine-executed steps of:
accessing data related to at least one presentation module related to a reference subject, wherein each of the at least one presentation module related to the reference subject includes a first description of the reference subject and a placeholder indicating that a second description of the reference subject is missing from the presentation module related to the reference subject; and
presenting the at least one presentation module related to the reference subject.

7. A computer interface according to claim 6, wherein the presentation module related to the presentation subject is displayed together with the at least one module related to the reference subject.

8. A computer interface according to any preceding claim, wherein the first description of the presentation subject is a visual representation of the presentation subject.

9. A computer interface according to claim 8, wherein the machine readable medium further stores instructions which, upon execution by a data processing system, controls the data processing system to provide a database storing the visual representation of the presentation subject, wherein the visual representation is usable by multiple presentation modules.

10. A computer interface according to claim 5, wherein the machine readable medium further stores instructions which, upon execution by a data processing system, controls the data processing system to provide a database storing a plurality of descriptions, wherein:
each of the descriptions is one of a textual type, a visual type and an audio type; and
at least one of the descriptions is usable by multiple presentation modules.

11. A computer interface according to claim 10, wherein the machine readable medium further stores instructions which, upon execution by a data processing system, controls the data processing system to perform the steps of:
accessing the at least one description stored in the database;
assembling the presentation module related to the presentation subject by using at least one of the descriptions stored in the database;
accessing data related at least one reference subject;
for each reference subject, assembling a presentation module related to the reference subject by using at least one of the descriptions stored in the database, wherein each of the presentation module related to the reference subject includes a first description of the reference subject and a placeholder indicating that a second description of the reference subject is missing from the presentation module related to the reference subject; and
presenting the presentation module related to the at least one reference subject together with the presentation module related to the presentation subject.

12. A computer interface according to claim 11, wherein the machine readable medium further stores instructions which, upon execution by a data processing system, controls the data processing system to perform the steps of:
accessing data related to multiple presentation subjects; and
assembling a plurality of presentation modules corresponding to the multiple presentation subjects by using descriptions stored in the database.

13. A computer interface according to claim 5, wherein the machine readable medium further stores instructions which, upon execution by a data processing system, controls the data processing system to provide a score record indicating the user's performance in providing the user input.

14. A computer interface according to any preceding claim, wherein the user input with respect to the second description is a textual input entered by a user using a keyboard or a voice-to-text converter.

15. A computer interface according to any preceding claim, wherein the user input with respect to the second description is a voice input provided by a user using a microphone.

16. A computer interface according to any preceding claim, wherein user input with respect to the second description includes a textual input and a voice input.

17. A computer interface according to any preceding claim, wherein the feedback indicates the correctness of the user input with respect to at least one of pronunciation, intonation and spelling.

18. A computer interface according to any preceding claim, wherein the first description of the presentation subject is a visual representation of the presentation subject.

19. A computer interface according to any preceding claim, comprising an electronic communication highway for communicating information, a data processor coupled with the communication highway for processing data, a dynamic memory device coupled wit the communicating highway for storing at least information and instructions to be executed by the processor, a static memory device for storing static information and instructions for the processor, a bulk storage device coupled to the information highway for storing information and instructions, a display, a user input device and a communication interface for connection to a remote data source.

20. A method for soliciting user input for a presentation subject associated with a first description of the presentation subject and a second description of the presentation subject, the method comprising the machine-executed steps of:
presenting a presentation module related to the presentation subject, wherein the presentation module includes the first description of the presentation subject and a placeholder indicating that the second description of the presentation subject is missing from the presentation module;
presenting the second description of the presentation subject;
receiving a user input indicating an association of the second description to presentation module related to the presentation subject; and
providing feedback indicating the correctness of the association.

21. A method according to claim 20 which is a language instruction method.

22. A method according to claim 20 or claim 21, wherein each of the first description of the presentation subject and the second description of the presentation

23. A method according to any of claims 20 - 22, further comprising the step of comparing the user input with prestored data of the second description of the presentation subject.

24. A machine-readable medium storing instructions which, upon execution by a data processing system, controls the data processing system to perform the machine executed steps of:
presenting a presentation module related to a presentation subject, wherein the presentation module includes a first description of the presentation subject and a placeholder indicating that a second description of the presentation subject is missing from the presentation module;
presenting the second description of the presentation subject;
receiving a user input indicating an association of the second description to presentation module related to the presentation subject; and
providing feedback indicating the correctness of the association.

25. A machine-readable medium storing instructions which, upon execution by a data processing system, controls the data processing system to perform the machine executed steps of:
presenting a presentation module including a first description of a presentation subject and a placeholder indicating that a second description of the presentation subject is missing from the presentation module;
receiving a user input with respect to the second description of the presentation subject;
comparing the user input with prestored data of the second description of the presentation subject; and
providing feedback indicating the correctness of the user input with respect to the second description of the presentation subject.
wherein each of the first description of the presentation subject and the second description of the presentation subject is one of a textual type, a visual type and an audio type.
